# EUROPÄISCHE PATENTSCHRIFT

(11) **EP 0 860 398 B1**
(45) Veröffentlichungstag und Bekanntmachung des Hinweises auf die Patenterteilung: **04.04.2001**
(21) Anmeldenummer: 98101141.4
(22) Anmeldetag: 23.01.1998
(51) Int. Cl.: C01B 33/38, C11D 3/12

(54) **Verfahren zur Herstellung von kristallinen Natriumsilikaten**
Method of preparing crystalline sodium silicates
Méthode de préparation de silicates de sodium cristallins

(30) Priorität: 25.02.1997 DE 19707448
(43) Veröffentlichungstag der Anmeldung: 26.08.1998
(73) Patentinhaber: Clariant GmbH, 65929 Frankfurt am Main (DE)
(72) Erfinder: Holz, Josef, 50374 Erftstadt (DE); Schimmel, Günther, Dr., 50374 Erftstadt (DE); Tapper, Alexander, Dr., 41239 Mönchengladbach (DE); Thewes, Volker, 40789 Monheim (DE)

(56) Entgegenhaltungen:
- EP-A- 0 293 640
- EP-A- 0 425 428
- EP-A- 0 627 383

## Beschreibung

Die Erfindung betrifft ein Verfahren zur Herstellung von kristallinen Natriumsilikaten mit Schichtstruktur und hohem δ-Phasenanteil aus überwiegend hydrothermal hergestelltem Wasserglas durch Entwässern des Wasserglases und anschließender Kristallisation bei erhöhter Temperatur.

Kristalline Natriumsilikate mit Schichtstruktur werden als Wasserenthärter und Builder in Wasch- und Reinigungsmitteln eingesetzt. Für diese Einsatzzwecke sind kristalline Natriumsilikate mit Schichtstruktur, insbesondere solche mit einem Molverhältnis von SiO₂ : Na₂O von (1,9 bis 2,1) : 1 geeignet. Diese werden auch als SKS-Typen bezeichnet. Je nach Herstell- und Kristallisationsbedingungen existieren von diesem Natriumsilikat mehrere Modifikationen, die als α-, β-, γ- und δ-Phasen bezeichnet werden. Für die obigen Anwendungen ist insbesondere die δ-Modifikation (SKS-6) von Interesse.

Im Stand der Technik sind bereits eine Reihe von Verfahren bekannt, mit denen kristalline Natriumsilikate mit Schichtstruktur hergestellt werden können.

Die EP 0 293 640 B1 beschreibt ein Verfahren zur Herstellung von kristallinen Natriumsilikaten mit Schichtstruktur und einem Molverhältnis von SiO₂ : Na₂O von 1,9 : 1 bis 3,5 :1 aus Wasserglaslösung mit einem Feststoffgehalt von 20 bis 65 Gew.-%, bei dem man die Wasserglaslösungen in einer Sprühtrocknungszone unter Bildung eines pulverförmigen amorphen Natriumsilikates mit maximal 20 Gew.-% Glühverlust behandelt, wobei das die Sprühtrocknungszone verlassende Abgas eine Temperatur von mindestens 140 °C aufweist und dann das sprühgetrocknete Natriumsilikat in einer Glühzone mit bewegter Feststoffschicht bei Temperaturen von 500 bis 800 °C 1 bis 60 Minuten in Gegenwart von mindestens 10 Gew.-% eines Rückgutes tempert, das durch mechanische Zerkleinerung von aus der Glühzone herausgetragenem kristallinem Natriumsilikat erhalten wurde. Bei diesem Verfahren ist es von Nachteil, daß zum störungsfreien Betrieb eine genügend große Menge des Rückgutes wieder eingesetzt werden muß. Hierdurch wird das Verfahren kompliziert.

Die EP 0 425 428 B1 beschreibt ebenfalls ein Verfahren zur Herstellung von kristallinen Natriumsilikaten mit Schichtstruktur und dem oben genannten Molverhältnis sowie einem Wassergehalt von weniger als 0,3 Gew.-% aus einer Wasserglaslösung mit mindestens 20 Gew.-% Feststoff, bei dem die Wasserglaslösung durch Umsetzung von Quarzsand mit Natronlauge gewonnen wurde, man die Wasserglaslösung in einer Sprühtrocknungszone bei 200 bis 300 °C und einer Verweilzeit von 10 bis 25 Sekunden sowie einer Temperatur des die Sprühtrocknungszone verlassenden Abgases von 90 bis 130 °C unter Bildung eines pulverförmigen Natriumsilikats behandelt, dann wird das obige Natriumsilikat in einem geneigt angeordneten, mit Einrichtung zur Bewegung von Feststoff ausgerüsteten Drehrohrofen eingebracht und mit Rauchgas bei Temperaturen von 500 bis 850 °C für einen Zeitraum von bis zu 60 Minuten im Gegenstrom unter Bildung von kristallinem Natriumsilikat behandelt.

Der Drehrohrofen ist dabei derartig isoliert, daß die Temperatur seiner Außenwand weniger als 60 °C beträgt. Das aus dem Drehrohrofen austretende kristalline Natriumsilikat wird mit Hilfe eines mechanischen Brechers auf Korngrößen von 0,1 bis 12 mm zerkleinert. Das nach diesem Verfahren erhaltene Natriumsilikat liegt hauptsächlich in der δ-Modifikation vor.

Ein Verfahren zur Herstellung von kristallinen Natriumsilikaten mit Schichtstruktur aus Sand und Soda beschreibt die EP-A-0 436 835. Danach werden Sand und Soda in einem Molverhältnis von SiO₂ : Na₂O von 2 bis 3,5 bei Temperaturen von 1200 bis 1400 °C aufgeschmolzen, nach dem Erkalten der Schmelze wird das angefallene stückige Wasserglas auf Korngrößen von weniger als 2 mm aufgemahlen und dann in einer langgestreckten Reaktionszone unter mechanischer Umwälzung für 10 bis 120 Minuten bei 600 bis 800 °C behandelt und anschließend auf eine Kornfeinheit von weniger als 1 mm aufgemahlen. Nach diesem Verfahren wird hauptsächlich α-Na₂Si₂O₅ erhalten.

Die EP-A-0 502 325 beschreibt ein der EP-A-0 425 428 ähnliches Verfahren, wobei man jedoch ein sprühgetrocknetes pulverförmiges amorphes Natriumsilikat vor seinem Einbringen in den Drehrohrofen aufmahlt. Bei diesem Verfahren weist das aus dem Drehrohrofen abströmende Abgas nur einen geringen Staubgehalt auf und im Drehrohrofen ist ein höherer Füllgrad möglich.

Eine weitere Verfahrensvariante beschreibt die EP-A-0 548 599, die bei dem bereits in der EP-A-0 425 428 beschriebenen Verfahren die Änderung beinhaltet, daß man das sprühgetrocknete pulverförmige amorphe Natriumdisilikat aufmahlt und nach dem Aufmahlen in einem mit Einrichtung zur Bewegung von Feststoff ausgerüsteten, von außen über die Wand beheizten und in seinem Innenraum mehrere verschiedene Temperaturzonen aufweisenden Drehrohrofen einbringt und darin bei Temperaturen von 400 bis 800 °C für 1 bis 60 Minuten unter Bildung von kristallinem Natriumdisilikat behandelt. Erhalten wird hauptsächlich die δ-Modifikation des Na₂Si₂O₅.

Insgesamt weisen die vorgenannten Verfahren den Nachteil auf, daß es sehr schwierig ist, unter reproduzierbaren Bedingungen nahezu 100 %ig aus δ-Modifikation bestehendes Na₂Si₂O₅ herzustellen. Selbst durch eine Reihe von aufwendigen Verfahrensschritten wird dieses Ziel nur unvollständig erreicht.

Es ist daher Aufgabe der vorliegenden Erfindung, ein einfaches und wirtschaftliches Verfahren zur Verfügung zu stellen, mit dem sich kristalline Natriumsilikate mit Schichtstruktur und einem Molverhältnis von SiO₂ : Na₂O von (1,9 bis 2,1) : 1 reproduzierbar herstellen lassen. Dabei soll das Schichtsilikat einen möglichst hohen δ-Phasenanteil aufweisen.

Diese Aufgabe wird gelöst durch ein Verfahren der eingangs beschriebenen Art, dadurch gekennzeichnet, daß das Wasserglas eine Mischung aus hydrothermal hergestelltem Wasserglas und Wannenofenwasserglas ist.

Hydrothermales Wasserglas entsteht durch die Reaktion von Sand mit Natronlauge gemäß der Reaktionsgleichung

a SiO₂ + 2b NaOH → a SiO₂ bNa₂O + b H₂O

in Druckbehältern bei 170 bis 220 °C und dem bei dieser Temperatur resultierendem Wasserdampfdruck. Die Reaktion kann in einfachen Nickel-Autoklaven durchgeführt werden. Dieses Herstellungsverfahren ist beispielsweise in der EP 0 425 428 B1 und in Winnacker-Küchler, Band 3, S.: 61ff beschrieben.

Wannenofenwasserglas wird durch Schmelzen von Sand und Soda bei sehr hohen Temperaturen gemäß der Reaktionsgleichung

a SiO₂ + b Na₂CO₃ → a SiO₂ b Na₂O + b CO₂

hergestellt (Winnacker-Küchler, Band 3, S.: 57ff). Diese Umsetzung erfolgt in ausgemauerten Wannenöfen. Das so erhaltene stückige Material wird anschließend durch Lösen bei Temperaturen von 130 bis 160 °C zu Wasserglaslösung umgesetzt. Es handelt sich um ein zweistufiges Verfahren (Schmelzen bei Temperaturen von oberhalb 1400 °C), welches sehr energieaufwendig ist und einen hohen apparativen Aufwand erfordert. Darüber hinaus müssen die resultierenden Lösungen gereinigt werden.

Bevorzugt besteht die erfndungsgemäße Mischung aus 0,5 bis 50 Gew.-% Wannenofenwasserglas und 50 bis 99,5 Gew.-% hydrothermal hergestelltem Wasserglas.

Besonders bevorzugt besteht die Mischung aus 1 bis 20 Gew.-% Wannenofenwasserglas und 80 bis 99 Gew.-% hydrothermal hergestelltem Wasserglas.

Besonders bevorzugt besteht die Mischung aus 5 bis 10 Gew.-% Wannenofenwasserglas und 90 bis 95 Gew.-% hydrothermal hergestelltem Wasserglas.

Bevorzugt beträgt der Feststoffgehalt der Wassergläser jeweils 20 bis 60 Gew.-%.

Besonders bevorzugt beträgt der Feststoffgehalt der Wassergläser jeweils 40 bis 50 Gew.-%.

Bevorzugt wird die Mischung der Wassergläser zu einem amorphen Natriumdisilikat entwässert.

Bevorzugt weist das amorphe Natriumdisilikat bei 620 bis 720 °C einen Glühverlust von 10 bis 25 Gew.-% auf.

Bevorzugt wird in einem Heißluftsprühturm entwässert.

Bevorzugt wird das amorphe Natriumdisilikat bei Temperaturen von mindenstens 450 °C, jedoch unterhalb seines Schmelzpunktes kristallisiert.

Bevorzugt wird die Kristallisation bei Temperaturen von 600 bis 800 °C durchgeführt.

Die Erfindung betrifft auch die Verwendung von kristallinen Natriumsilikaten mit Schichtstruktur hergestellt nach dem erfindungsgemäßen Verfahren zur Herstellung von Wasch-, Reinigungs- und Geschirrspülmitteln.

Bei den nachfolgenden Beispielen wird von den jeweiligen Proben ein Roentgendiffraktogramm aufgenommen und für die Berechnung der Phasenverteilung die Roentgenreflexe bei folgenden d-Werten herangezogen:

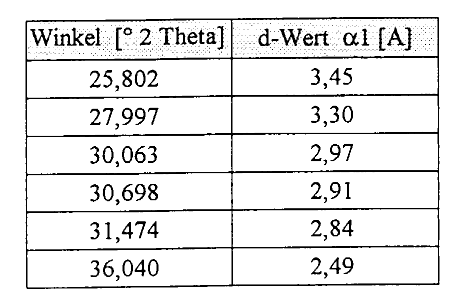

Die Intensitäten der Roentgenreflexe werden in an sich üblicher Weise in die nachstehenden empirisch ermittelten Formeln eingesetzt (I = Intensität, ges. = gesamt):
- Intensität (gesamt) =: I(3,30) + I(2,97)^{*}1,8 + [I(3,45)+I(2,91)+I(2,84)+I(2,49)]*1,89
- Anteil α-Phase in % =: [I(3,30) * 100]/ges. I
- Anteil β-Phase in % =: [I(2,97) ^{*} 180]/ges. I
- Anteil δ-Phase in % =: {[I(3,45)+I(2,91)+I(2,84)+I(2,49)]^{*}189} / ges. I

### Beispiel 1 (Vergleichsbeispiel)

400 g einer handelsüblichen Wasserglaslösung mit einem SiO₂/Na₂O-Verhältnis von 2 zu 1 und einem Feststoffgehalt von 45 Gew.-%, hergestellt durch hydrothermalen Aufschluß von Sand mit Natronlauge, wurden in einem Laborheißluftsprühturm (Eingangstemperatur 220 °C, Abgastemperatur 120 °C) entwässert, so daß ein amorphes Natriumdisilikat mit einem Glühverlust von 16,8 Gew.-% bei 620 °C entstand. 8 g des amorphen Natriumdisilikats wurden danach 1 h in einem Muffelofen bei 620 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 5,2 % |
| Anteil β-Phase | 34,1 % |
| Anteil δ-Phase | 60,7 % |

### Beispiel 2 (Vergleichsbeispiel)

Es wurde vorgegangen wie in Beispiel 1. 400 g einer anderen handelsüblichen Wasserglaslösung (ebenfalls hydrothermal hergestellt) wurden in einem Laborheißluftsprühturm (Eingangstemperatur 220 °C, Abgastemperatur 120 °C) entwässert, so daß ein amorphes Natriumdisilikat mit einem Glühverlust von 17,1 Gew.-% bei 720 °C entstand. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 26,4 % |
| Anteil β-Phase | 43,1 % |
| Anteil δ-Phase | 30,5% |

### Beispiel 3 ( Vergleichsbeispiel)

Es wurde vorgegangen wie in Beispiel 1, jedoch wurde eine handelsübliche Wannenofenwasserglaslösung mit einem SiO₂/Na₂O-Verhältnis von 2 und einem Feststoffgehalt von 45 Gew.-% eingesetzt. Nach dem Sprühtrocknen wie in Beispiel 1 erhielt man ein amorphes Natriumdisilikat mit einem Glühverlust von 17,4 Gew.-% bei 620 °C. 8 g des amorphen Natriumdisilikats wurden danach 1 h in einem Muffelofen bei 620 °C getempert und anschließend rasch abgekühlt. Die für die Phasenberechnung nötigen Roentgenreflexe (Lage und Intensität ) sind in Tabelle 1 dargestellt. Die prozentuale Verteilung auf die kristallinen Phasen beträgt nach den oben aufgeführten Formeln:

| | |
|---|---|
| Anteil α-Phase | 0 % |
| Anteil ß-Phase | 4,6 % |
| Anteil δ-Phase | 95,6 % |

### Beispiel 4 (Vergleichsbeispiel)

Es wurde vorgegangen wie in Beispiel 3, wobei man nach dem Sprühtrocknen ein amorphes Natriumdisilikat mit einem Glühverlust von 17,7 Gew.-% bei 720 °C entstand. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 2 dargestellt. Die prozentuale Verteilung auf die kristallinen Phasen beträgt nach den oben aufgeführten Formeln:

| | |
|---|---|
| Anteil α-Phase | 0 % |
| Anteil β-Phase | 0 % |
| Anteil δ-Phase | 100 % |

### Beispiel 5 (Vergleichsbeispiel)

Es wurde vorgegangen wie in Beispiel 1, jedoch wurde eine Wannenofenwasserglaslösung eines anderen Herstellers mit einem SiO₂/Na₂O-Verhältnis von 2 und einem Feststoffgehalt von 55 Gew.-% eingesetzt. Nach dem Sprühtrocknen wie in Beispiel 1 erhielt man ein amorphes Natriumdisilikat mit einem Glühverlust von 17,2 Gew.-% bei 720 °C. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 0 % |
| Anteil β-Phase | 0 % |
| Anteil δ-Phase | 100 % |

### Beispiel 6 ( gemäß der Erfindung)

400 g einer Mischung aus 80 Gew.-% hydrothermal hergestelltem Wasserglas (wie in Beispiel 2) und 20 Gew.-% Wannenofenwasserglas (wie in Beispiel 3 oder 4) wurden in einem Laborheißluftsprühturm (Eingangstemperatur 220 °C, Abgastemperatur 120 °C) entwässert, so daß ein amorphes Natriumdisilikat mit einem Glühverlust von 16,6 Gew.-% bei 720 °C entstand. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 1,8 % |
| Anteil β-Phase | 3,9% |
| Anteil δ-Phase | 94,3 % |

### Beispiel 7 (gemäß der Erfindung)

Es wurde vorgegangen wie in Beispiel 6, jedoch wurden 400 g einer Mischung aus 90 Gew.-% hydrothermal hergestelltem Wasserglas (wie in Beispiel 1) und 10 Gew.-% Wannenofenwasserglas (wie in Beispiel 3 oder 4) eingesetzt. Nach dem Sprühtrocknen wie in Beispiel 1 erhielt man ein amorphes Natriumdisilikat mit einem Glühverlust von 16,7 Gew.-% bei 720 °C. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 0 % |
| Anteil β-Phase | 0 % |
| Anteil δ-Phase | 100 % |

### Beispiel 8 (gemäß der Erfindung)

Es wurde vorgegangen wie in Beispiel 6, jedoch wurden 400 g einer Mischung aus 95 Gew.-% hydrothermal hergestelltem Wasserglas (wie in Beispiel 1) und 5 Gew.-% Wannenofenwasserglas (wie in Beispiel 3 oder 4) eingesetzt. Nach dem Sprühtrocknen wie in Beispiel 1 erhielt man hieraus ein amorphes Natriumdisilikat mit einem Glühverlust von 16,1 Gew.-% bei 620 °C . 8 g des amorphen Natriumdisilikats wurden danach 1 h in einem Muffelofen bei 620 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 1,6 % |
| Anteil β-Phase | 9,2 % |
| Anteil δ-Phase | 89,2 % |

### Beispiel 9 (gemäß der Erfindung)

Es wurde vorgegangen wie in Beispiel 1, jedoch wurden 400 g einer Mischung aus 98 Gew.-% hydrothermal hergestelltem Wasserglas (wie in Beispiel 1) und 2 Gew.-% Wannenofenwasserglas (wie in Beispiel 3 oder 4) eingesetzt. Nach dem Sprühtrocknen wie in Beispiel 1 erhielt man ein amorphes Natriumdisilikat mit einem Glühverlust von 16,3 Gew.-% bei 720 °C . 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 0,5 % |
| Anteil β-Phase | 6,3 % |
| Anteil δ-Phase | 93,2 % |

### Beispiel 10 (gemäß der Erfindung)

Es wurde vorgegangen wie in Beispiel 6, jedoch wurden 400 g einer Mischung aus 95 Gew.-% hydrothermal hergestelltem Wasserglas (wie in Beispiel 1) und 5 Gew.-% Wannenofenwasserglas (wie in Beispiel 5) eingesetzt. Nach dem Sprühtrocknen wie in Beispiel 1 erhielt man ein amorphes Natriumdisilikat mit einem Glühverlust von 15,6 Gew.-% bei 720 °C. 8 g des amorphen Natriumdisilikats wurden danach 1 h in einem Muffelofen bei 720 °C getempert und anschließend rasch abgekühlt. Die für die Phasenberechnung nötigen Roentgenreflexe (Lage und Intensität) sind in Tabelle 1 dargestellt. Die prozentuale Verteilung auf die kristallinen Phasen beträgt nach den oben aufgeführten Formeln:

| | |
|---|---|
| Anteil α-Phase | 0,9 % |
| Anteil β-Phase | 0 % |
| Anteil δ-Phase | 99,1 % |

**Tabelle 1:**

| Roentgenreflexe zu den Beispielen 1 bis 10 | | | | | | |
|---|---|---|---|---|---|---|
| Beispiel | Intensität rel [% ] bei dα1 3,45 | Intensität rel [% ] bei dα1 3,30 | Intensität rel [% ] bei dα1 2,97 | Intensität rel [% ] bei dα1 2,91 | Intensität rel [% ] bei dα1 2,84 | Intensität rel [% ] bei dα1 2,49 |
| 1 | 7,4 | 7,5 | 27,3 | 9,8 | 14,7 | 14,4 |
| 2 | 5,8 | 54,3 | 49,2 | 7,7 | 12,5 | 7,1 |
| 3 | 8 | 0 | 2,3 | 11 | 14,7 | 14,3 |
| 4 | 9,5 | 0 | 0 | 11 | 14,6 | 15,3 |
| 5 | 9,2 | 0 | 0 | 11,1 | 15,1 | 15,6 |
| 6 | 8,5 | 1.7 | 2 | 10,6 | 15 | 12,8 |
| 7 | 9,2 | 0 | 0 | 10,3 | 15,1 | 15 |
| 8 | 8,7 | 1,6 | 5,3 | 10,8 | 15,1 | 14,1 |
| 9 | 9,4 | 0,5 | 3,5 | 10,7 | 15,4 | 14,3 |
| 10 | 9,3 | 0,8 | 0 | 10 | 15,6 | 13,8 |

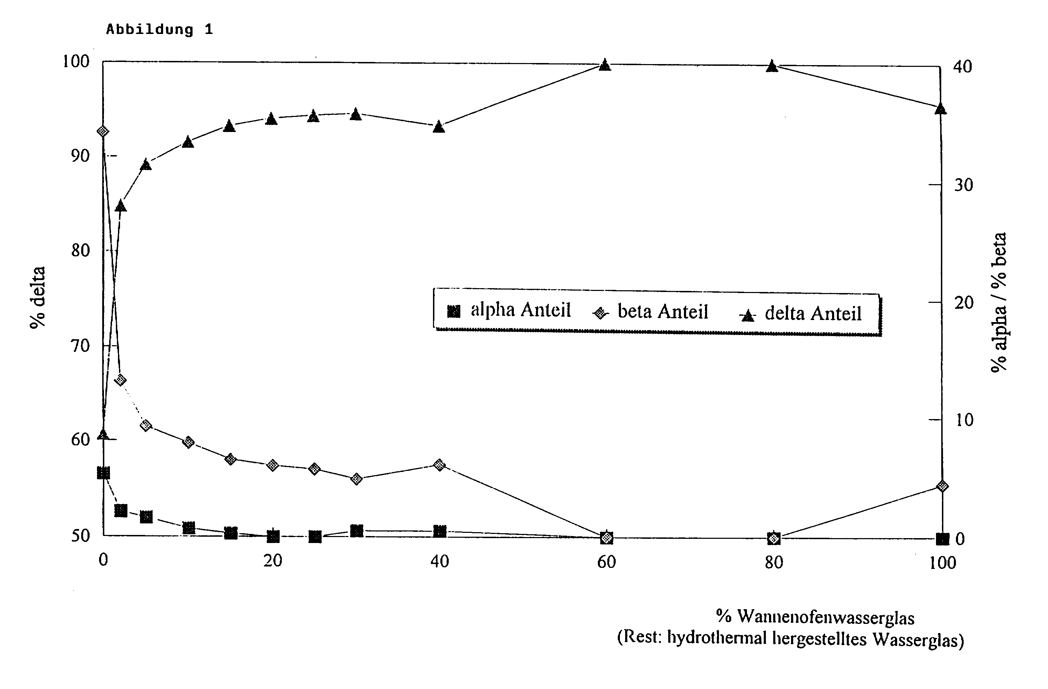

Die nachfolgende Abb. 1 zeigt das Ergebnis der erfindungsgemäßen Herstellung von kristallinen Natriumsilikaten anhand der Anteile der kristallinen Phasen in Abhängigkeit vom Verhältnis Wannenofenwasserglas zu hydrothermal hergestelltem Wasserglas (getempert bei 620 °C).

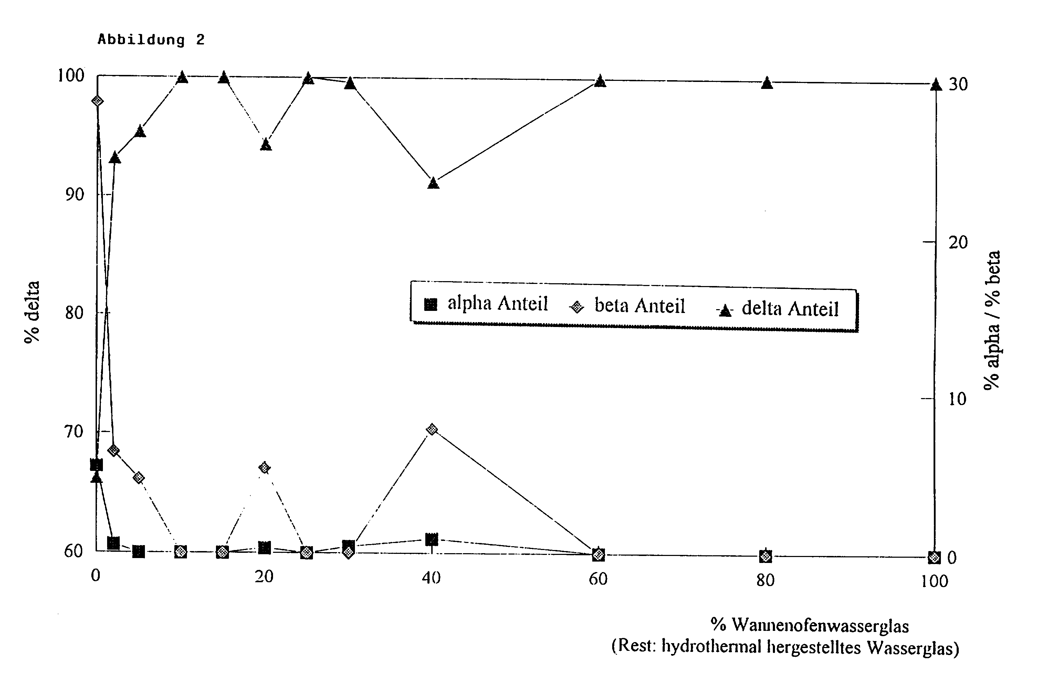

Abb. 2 zeigt das analoge Ergebnis, wenn bei 720 °C getempert wurde.

## Patentansprüche

1. Verfahren zur Herstellung von kristallinen Natriumsilikaten mit Schichtstruktur und hohem δ-Phasenanteil aus überwiegend hydrothermal hergestelltem Wasserglas durch Entwässern des Wasserglases und anschließender Kristallisation bei erhöhter Temperatur, dadurch gekennzeichnet, daß das Wasserglas eine Mischung aus hydrothermal hergestelltem Wasserglas und Wannenofenwasserglas ist.

2. Verfahren nach Anspruch 1, dadurch gekennzeichnet, daß die Mischung aus 0,5 bis 50 Gew.-% Wannenofenwasserglas und 50 bis 99,5 Gew.-% hydrothermal hergestelltem Wasserglas besteht.

3. Verfahren nach Anspruch 1 oder 2, dadurch gekennzeichnet, daß die Mischung aus 1 bis 20 Gew.-% Wannenofenwasserglas und 80 bis 99 Gew.-% hydrothermal hergestelltem Wasserglas besteht.

4. Verfahren nach mindestens einem der Ansprüche 1 bis 3, dadurch gekennzeichnet, daß die Mischung aus 5 bis 10 Gew.-% Wannenofenwasserglas und 90 bis 95 Gew.-% hydrothermal hergestelltem Wasserglas besteht.

5. Verfahren nach mindestens einem der Ansprüche 1 bis 4, dadurch gekennzeichnet, daß das der Feststoffgehalt der Wassergläser jeweils 20 bis 60 Gew.-% beträgt.

6. Verfahren nach mindestens einem der Ansprüche 1 bis 5, dadurch gekennzeichnet, daß der Feststoffgehalt der Wassergläser jeweils 40 bis 50 Gew.-% beträgt.

7. Verfahren nach mindestens einem der Ansprüche 1 bis 6, dadurch gekennzeichnet, daß die Mischung der Wassergläser zu einem amorphen Natriumdisilikat entwässert wird.

8. Verfahren nach Anspruch 7, dadurch gekennzeichnet, daß das amorphe Natriumdisilikat bei 620 bis 720 °C einen Glühverlust von 10 bis 25 Gew.-% aufweist.

9. Verfahren nach mindestens einem der Ansprüche 1 bis 8, dadurch gekennzeichnet, daß in einem Heißluftsprühturm entwässert wird.

10. Verfahren nach mindestens einem der Ansprüche 1 bis 9, dadurch gekennzeichnet, daß das amorphe Natriumdisilikat bei Temperaturen von mindenstens 450 °C, jedoch unter halb seines Schmelzpunktes kristallisiert wird.

11. Verfahren nach mindestens einem der Ansprüche 1 bis 10, dadurch gekennzeichnet, daß die Kristallisation bei Temperaturen von 600 bis 800 °C durchgeführt wird.

## Claims

1. A process for the preparation of crystalline sodium silicates having a sheet structure and high δ phase content from water glass, which has been prepared predominantly hydrothermally, by dehydration of the water glass and subsequent crystallization at elevated temperature, wherein the water glass is a mixture of water glass prepared hydrothermally and tank furnace water glass.

2. The process as claimed in claim 1, wherein the mixture consists of from 0.5 to 50% by weight of tank furnace water glass and from 50 to 99.5% by weight of water glass prepared hydrothermally.

3. The process as claimed in claim 1 or 2, wherein the mixture consists of from 1 to 20% by weight of tank furnace water glass and from 80 to 99% by weight of water glass prepared hydrothermally.

4. The process as claimed in at least one of claims 1 to 3, wherein the mixture consists of from 5 to 10% by weight of tank furnace water glass and from 90 to 95% by weight of water glass prepared hydrothermally.

5. The process as claimed in at least one of claims 1 to 4, wherein the solids content of each water glass is from 20 to 60% by weight.

6. The process as claimed in at least one of claims 1 to 5, wherein the solids content of each water glass is from 40 to 50% by weight.

7. The process as claimed in at least one of claims 1 to 6, which comprises dehydrating the water glass mixture to give an amorphous sodium disilicate.

8. The process as claimed in claim 7, wherein the amorphous sodium disilicate has an ignition loss of from 10 to 25% by weight at 620 to 720°C.

9. The process as claimed in at least one of claims 1 to 8, which comprises carrying out the dehydration in a hot-air spray tower.

10. The process as claimed in at least one of claims 1 to 9, which comprises crystallizing the amorphous sodium disilicate at temperatures of at least 450°C, but below its melting point.

11. The process as claimed in at least one of claims 1 to 10, which comprises carrying out the crystallization at temperatures of from 600 to 800°C.

## Revendications

1. Procédé de préparation de silicates de sodium cristallins lamellaires et ayant une proportion élevée de phase δ à partir d'un proportion prépondérante de verre soluble préparé par voie hydrothermale par déshydratation du verre soluble et ensuite cristallisation à température plus élevée, caractérisé en ce que, le verre soluble est un mélange de verre soluble préparé par voie hydrothermale et de verre soluble de four à cuve.

2. Procédé selon la revendication 1, caractérisé en ce que, le mélange est constitué de 0,5 à 50% en poids de verre soluble de four à cuve et de 50 à 99,5% en poids de verre soluble préparé par voie hydrothermale.

3. Procédé selon la revendication 1 ou 2, caractérisé en ce que, le mélange est constitué de 1 à 20% en poids de verre soluble de four à cuve et de 80 à 99% en poids de verre soluble préparé par voie hydrothermale.

4. Procédé selon au moins une des revendications 1 à 3, caractérisé en ce que, le mélange est constitué de 5 à 10% en poids de verre soluble de four à cuve et de 90 à 95% en poids de verre soluble préparé par voie hydrothermale.

5. Procédé selon au moins une des revendications 1 à 4, caractérisé en ce que, la teneur en matière solide des verres solubles s'élève respectivement à entre 20 et 60% en poids.

6. Procédé selon au moins une des revendications 1 à 5, caractérisé en ce que, la teneur en matière solide des verres solubles s'élève respectivement à entre 40 et 50% en poids.

7. Procédé selon au moins une des revendications 1 à 6, caractérisé en ce que, le mélange des verres solubles est desséché pour obtenir un bisilicate de sodium amorphe.

8. Procédé selon la revendication 7, caractérisé en ce que, le bisilicate de sodium amorphe présente entre 620 et 720°C une perte au feu de 10 à 25% en poids.

9. Procédé selon au moins une des revendications 1 à 8, caractérisé en ce que le produit est déshydraté dans une tour de pulvérisation à air chaud.

10. Procédé selon au moins une des revendications 1 à 9, caractérisé en ce que le bisilicate de sodium amorphe est cristallisé à des températures d'au moins 450°C, mais au-dessous de son point de fusion.

11. Procédé selon au moins une des revendications 1 à 10, caractérisé en ce que la cristallisation est effectuée à des températures comprises entre 600 et 800°C.
